# EUROPÄISCHE PATENTSCHRIFT

(11) **EP 3 464 034 B1**
(45) Veröffentlichungstag und Bekanntmachung des Hinweises auf die Patenterteilung: **27.05.2020**
(21) Anmeldenummer: 17730711.3
(22) Anmeldetag: 01.06.2017
(51) Int. Cl.: B62H 3/04, B62H 3/12

(54) **HALTEVORRICHTUNG FÜR FAHRRÄDER, FAHRRAD-HALTEVORRICHTUNG SOWIE EIN VERFAHREN ZUM ABSTELLEN EINES FAHRRADES IN EINER GEHALTENEN STELLUNG**
HOLDING DEVICE FOR BICYCLES, BICYCLE HOLDING DEVICE, AND METHOD FOR PARKING A BICYCLE IN A HELD POSITION
DISPOSITIF DE RETENUE POUR BICYCLETTES, DISPOSITIF DE RETENUE DE BICYCLETTE ET PROCÉDÉ PERMETTANT DE GARER UNE BICYCLETTE DANS UNE POSITION RETENUE

(30) Priorität: 02.06.2016 DE 202016003500 U
(43) Veröffentlichungstag der Anmeldung: 10.04.2019
(73) Patentinhaber: Kocherscheidt, Schiller, Simon und Thiele GBR, 73066 Uhingen (DE)
(72) Erfinder: KOCHERSCHEIDT, Tobias, 73095 Albershausen (DE)
(74) Vertreter: Viering, Jentschura & Partner mbB Patent- und Rechtsanwälte
(86) Internationale Anmeldenummer: PCT/EP2017/063377
(87) Internationale Veröffentlichungsnummer: WO 2017/207724

(56) Entgegenhaltungen:
- WO-A1-96/07581
- CH-A5- 690 675
- DE-U1- 8 705 973
- JP-A- 2004 001 663
- JP-U- S 586 679
- JP-U- S5 624 388
- JP-U- S55 117 374
- JP-U- S55 124 384
- JP-U- S56 119 849
- US-A1- 2013 043 198

## Beschreibung

Die Erfindung betrifft eine Haltevorrichtung für Fahrräder, eine Fahrrad-Haltevorrichtung sowie ein Verfahren zum Abstellen eines Fahrrades in einer gehaltenen Stellung JPS55-124384U offenbart die Merkmale des Oberbegriffes des Anspruchs 1.

Fahrradhalterungen üblicher bzw. bekannter Bauart für eine platzsparende Aufbewahrungsfrist weisen Haken, Schienen oder ähnliches auf, in die ein Fahrrad mit gewissem Kraftaufwand eingehängt werden müssen oder ggf. sogar hochgezogen werden müssen. Je nach Befestigungsart benötigen auch größere Kinder auch noch die Hilfe Erwachsener um an ihre Fahrräder zu gelangen. Eine auch für Kinder leicht zu bedienende platzsparende Halterung für Fahrräder unterschiedlicher Größen und vor allem auch für unterschiedlicher Reifendicken ohne Austausch von Teilen existiert derzeit nicht.

Der im Schutzanspruch 1 angegebenen Erfindung liegt daher das Problem zugrunde, eine Fahrradhalterung zu schaffen, die sowohl von Kindern als auch von Erwachsenen leicht zu bedienen ist und in der Lage ist, und vor Allem ohne Austausch von Teilen, unterschiedliche Reifendicken (Rennrad, Mountainbike, Citybike, etc.) und Rahmengrößen aufzunehmen.

Dieses Problem wird mit der im Schutzanspruch 1 aufgeführten Merkmalskombination gelöst. Überdies wird eine Fahrrad-Haltevorrichtung gemäß Anspruch 7 oder gemäß Anspruch 8 vorgeschlagen. Ein erfindungsgemäßes Verfahren ist im Anspruch 9 definiert. Die Unteransprüche definieren einige Beispiele der Erfindung.

Es wird also insbesondere eine Haltevorrichtung für Fahrräder vorgeschlagen, die aufweist: eine Halterung, und eine Vielzahl von Borsten bzw. Lamellen, die mittels der Halterung getragen sind, wobei die Halterung zwei einander gegenüberliegende Halteabschnitte ausbildet, zwischen welchen ein Raum für die Aufnahme eines Rades eines Fahrrades ausgebildet ist, und wobei zumindest ein Teil, d.h. zumindest einige, dieser Borsten mit freien Enden in diesen Raum ragt.

Insbesondere ragen die Borsten bzw. Lamellen dabei zum Halten bzw. zum Stabilisieren des Rades des Fahrrades in den genannten Raum.

Es kann vorgesehen sein, dass die Borsten bzw. Lamellen im Zusammenwirken mit der Halterung und/oder den im Folgenden noch angesprochenen Tragkörpern eine Stützfunktion für das Fahrrad über ein Rad desselben ausüben, sofern ein Fahrrad entsprechend mit einem seiner Räder in dem genannten Raum positioniert ist. Insbesondere kann vorgesehen sein, dass dabei das Fahrrad über eines seiner Räder nur mit den Borsten bzw. Lamellen in Kontakt ist, wenn es mit einem Rad in dem Raum zwischen den halteabschnitten positioniert ist. Alternativ kann vorgesehen sein, dass das Fahrrad dabei über eines seiner Räder mit den Borsten bzw. Lamellen und den Halteabschnitten oder über eines seiner Räder mit den Borsten bzw. Lamellen und den im Folgenden noch angesprochenen Tragkörpern in Kontakt ist.

Bevorzugt ist vorgesehen, dass die Borsten bzw. Lamellen mit einem Ende an einem der gegenüberliegenden Halteabschnitte oder an einem Tragkörper befestigt sind, wobei das jeweils gegenüberliegende Ende dieser Borsten bzw. Lamellen ein freies Ende ist Es kann aber auch beispielsweise vorgesehen sein, dass die Borsten durch einen U-förmigen Kanal oder eine Anordnung von zwei nebeneinanderliegenden Öffnungen, deren öffnungsquerschnitte im Wesentlichen parallel und/oder in einer Ebene gelegen sind, derart durchgefädelt sind, dass die beiden freien Enden einer betreffenden Borste in der gleichen Richtung gelegen sind und in den genannten Raum, der für die Aufnahme eines Rades vorgesehen ist, ragen. Die jeweilige Anordnung der beiden Öffnungen bzw. der U-förmige Kanal kann dabei beispielweise an einem der gegenüberliegenden Hatteabschnitte oder an einem Tragkörper vorgesehen sein.

Erfindungsgemäß ist vorgesehen, dass sich erste Borsten bzw. Lamellen der Vielzahl von Borsten bzw. Lamellen aus der Richtung von und/oder von dem einen der zwei einander gegenüberliegenden Halteabschnitte mit ihren freien Enden in den Raum erstrecken, der für die Aufnahme eines Rades eines Fahrrades zwischen zwei einander gegenüberliegenden Halteabschnitten ausgebildet ist, und dass sich zweite Borsten bzw. Lamellen der Vielzahl von Borsten bzw. Lamellen aus der Richtung von und/oder von dem anderen der zwei einander gegenüberliegenden Halteabschnitte mit ihren freien Enden in diesen Raum erstrecken, der für die Aufnahme eines Rades eines Fahrrades zwischen zwei einander gegenüberliegende Halteabschnitten ausgebildet ist.

Dies gilt insbesondere für den von äußeren Kräften freien Zustand der Borsten, d.h. insbesondere für einen Zustand, in dem kein Rad eines Fahrrades in den Raum zur Aufnahme eines Rades eines Fahrrades eingeführt ist.

Die Borsten bzw. Lamellen sind nämlich insbesondere verformbar, insbesondere elastisch verformbar, wobei die damit bei Verformung der Borsten bzw. Lamellen auftretenden Rückstellkräfte zum Halten eines Rades des Fahrrades (und dadurch des Fahrrades) genutzt werden, wenn ein solches Rad in den Raum eingeführt ist. Ferner kann die Halterung oder können Abschnitte oder Teile der Halterung elastisch ausgebildet sein, um ein derartiges Halten des Rades, insbesondere weiter, zu unterstützen, und zwar insbesondere dann, wenn das Rad, insbesondere in seiner Axialrichtung, Abmessungen hat, die ausreichen, um die Halterung oder Teile oder Abschnitte davon so zu belasten, dass sich diese Halterung bzw. diese Teile bzw. diese Abschnitte (elastisch) verformen.

Die Borsten können beispielsweise bündelweise vorgesehen sein, so dass eine Vielzahl von bündelweise angeordneten Borsten gegeben ist Es kann aber auch vorgesehen sein, dass die Borsten bzw. Lamellen einzeln vorgesehen sind. Dabei können die Borsten bzw. Lamellen in regelmäßigen Abständen angeordnet sein. Alternativ kann vorgesehen sein, dass die Borsten bzw. Lamellen in unregelmäßigen Abständen angeordnet sind.

Es kann vorgesehen sein, dass Borsten bzw. Lamellen oder alle Borsten bzw. Lamellen im (von außen) unbelasteten Zustand im Wesentlichen parallel zueinander ausgerichtet sind.

Es kann vorgesehen sein aber nicht beansprucht, dass sämtliche Borsten bzw. Lamellen gleich lang sind.

Erfindungsgemäß sind allerdings Borsten bzw. Lamellen unterschiedlicher Längen vorgesehen. Es kann beispielsweise vorgesehen sein, dass Borsten bzw. Lamellen von genau zwei unterschiedlicher Längen gegeben sind, oder dass Borsten bzw. Lamellen genau drei unterschiedlicher Längen gegeben sind, oder dass Borsten bzw. Lamellen genau vier unterschiedlichen Längen gegeben sind, oder dass Borsten bzw. Lamellen genau fünf unterschiedlichen Längen gegeben sind, oder dass Borsten bzw. Lamellen genau sechs unterschiedlichen Längen gegeben sind, oder dass Borsten bzw. Lamellen genau sieben unterschiedlichen Längen gegeben sind, oder dass Borsten bzw. Lamellen genau acht unterschiedlichen Längen gegeben sind, oder dass Borsten bzw. Lamellen genau neun unterschiedlichen Längen gegeben sind, oder dass Borsten bzw. Lamellen genau zehn unterschiedlichen Längen gegeben sind, oder dass Borsten bzw. Lamellen von mehr als zehn unterschiedlichen Längen gegeben sind.

Es kann vorgesehen sein, dass erste Borsten bzw. Lamellen unterschiedlicher Länge vorgesehen sind, sowie zweite Borsten bzw. Lamellen unterschiedlicher Länge. Es sei angemerkt, dass sich im Sinne der vorliegenden Anmeldung insbesondere die ersten Borsten bzw. Lamellen von oder aus Richtung des einen der Halteabschnitte mit zumindest einem freien Ende im bzw. in den Raum zwischen den Halteabschnitten erstrecken, und sich die zweiten Borsten bzw. Lamellen von oder aus Richtung des anderen, gegenüberliegenden Halteabschnitts mit zumindest einem freien Ende im bzw. in den Raum zwischen den Halteabschnitten erstrecken.

Beispielsweise können erste Borsten bzw. Lamellen einer ersten Länge und erste Borsten bzw. Lamellen einer zweiten Länge, die sich von der ersten Länge unterscheidet, gegeben sein. Ferner können zweite Borsten bzw. Lamellen einer dritten Länge und zweite Borsten bzw. Lamellen einer vierten Länge, die sich von der dritten Länge unterscheidet, gegeben sein. Beispielsweise kann die erste Länge gleich der dritten Länge sein und/oder die zweite Länge gleich der vierten Länge sein. Es kann vorgesehen sein, dass die zweite Länge zwischen 0,3 und 0,8, z.B. zwischen 0,4 und 0,6, z.B. 0,5 der ersten Länge beträgt, und/oder dass die vierte Länge zwischen 0,3 und 0,8, z.B. zwischen 0,4 und 0,6, z.B. 0,5 der dritten Länge beträgt.

Die Dicken bzw. Durchmesser sämtlicher Borsten bzw. Lamellen kann identisch sein. Es kann aber auch vorgesehen sein, dass Borsten bzw. Lamellen unterschiedlicher Durchmesser bzw. Dicken gegeben sind.

Beispielsweise ist die Anzahl der Borsten der Haltevorrichtung größer als 20, vorzugsweise größer als 40, vorzugsweise größer als 60, vorzugsweise größer als 80, vorzugsweise größer als 100, vorzugsweise größer als 150, vorzugsweise größer als 200, vorzugsweise größer als 250, vorzugsweise größer als 300, vorzugsweise größer als 400, vorzugsweise größer als 500, vorzugsweise größer als 600, vorzugsweise größer als 700, vorzugsweise größer als 800, vorzugsweise größer als 900, vorzugsweise größer als 1.000.

Es kann vorgesehen sein, dass die Anzahl der ersten Borsten der Haltevorrichtung größer als 10, vorzugsweise größer als 20, vorzugsweise größer als 30, vorzugsweise größer als 40, vorzugsweise größer als 50, vorzugsweise größer als 75, vorzugsweise größer als 100, vorzugsweise größer als 125, vorzugsweise größer als 150, vorzugsweise größer als 200, vorzugsweise größer als 250, vorzugsweise größer als 300, vorzugsweise größer als 250, vorzugsweise größer als 400, vorzugsweise größer als 450, vorzugsweise größer als 500 ist.

Ferner kann vorgesehen sein, dass die Anzahl der zweiten Borsten der Haltevorrichtung größer als 10, vorzugsweise größer als 20, vorzugsweise größer als 30, vorzugsweise größer als 40, vorzugsweise größer als 50, vorzugsweise größer als 75, vorzugsweise größer als 100, vorzugsweise größer als 125, vorzugsweise größer als 150, vorzugsweise größer als 200, vorzugsweise größer als 250, vorzugsweise größer als 300, vorzugsweise größer als 250, vorzugsweise größer als 400, vorzugsweise größer als 450, vorzugsweise größer als 500 ist.

Die ersten Borsten können beispielsweise verteilt und/oder bündelweise auf einer Fläche angeordnet sein, die kleiner als 1.000 cm² und größer als 25 cm², vorzugsweise kleiner als 800 cm² und größer als 25 cm², vorzugsweise kleiner als 600 cm² und größer als 25 cm², vorzugsweise kleiner als 400 cm² und größer als 25 cm², vorzugsweise kleiner als 300 cm² und größer als 25 cm², vorzugsweise kleiner als 250 cm2 und größer als 40cm², vorzugsweise kleiner als 150 cm² und größer als 40 cm² ist. Dabei ist die Fläche insbesondere durch die kürzeste Linie um alle ersten Borsten bestimmt.

Die zweiten Borsten können beispielsweise verteilt und/oder bündelweise auf einer Fläche angeordnet sein, die kleiner als 1.000 cm² und größer als 25 cm², vorzugsweise kleiner als 800 cm² und größer als 25 cm², vorzugsweise kleiner als 600 cm² und größer als 25 cm², vorzugsweise kleiner als 400 cm² und größer als 25 cm², vorzugsweise kleiner als 300 cm² und größer als 25 cm², vorzugsweise kleiner als 250 cm² und größer als 40 cm², vorzugsweise kleiner als 150 cm² und größer als 40 cm² ist. Dabei ist die Fläche insbesondere durch die kürzeste Linie um alle zweiten Borsten bestimmt.

Es kann vorgesehen sein, dass zwischen den oder zwischen freien Enden der ersten Borsten bzw. Lamellen und den freien Enden oder freien Enden der zweiten Borsten bzw. Lamellen ein borstenfreier bzw. lamellenfreier Zwischenraum vorgesehen ist, und zwar in Richtung der Längserstreckung dieser Borsten bzw. Lamellen in ihrem von außen unbelasteten Zustand gesehen.

Alternativ bzw. ergänzend kann vorgesehen sein dass sich mehrere oder alle ersten Borsten bzw. Lamellen mit mehreren oder allen zweiten Borsten bzw. Lamellen überlappen, und zwar in Richtung der Längserstreckung dieser ersten Borsten bzw. Lamellen und/oder in Richtung der Längserstreckung dieser zweiten Borsten bzw. Lamellen im von außen unbelasteten Zustand der Borsten bzw. Lamellen gesehen. Beispielsweise kann vorgesehen sein, dass sich erste Borsten bzw. Lamellen und zweite Borsten bzw. Lamellen zwischen 1% und 75% der Länge der ersten Borsten, vorzugsweise zwischen 1% und 60% der Länge der ersten Borsten bzw. Lamellen, vorzugsweise zwischen 1% und 50% der Länge der ersten Borsten, vorzugsweise zwischen 1% und 40% der Länge der ersten Borsten bzw. Lamellen, vorzugsweise zwischen 10% und 40% der Länge der ersten Borsten bzw. Lamellen, vorzugsweise zwischen 20% und 40% der Länge der ersten Borsten bzw. Lamellen, vorzugsweise ca, 1/3 der Länge der ersten Borsten bzw. Lamellen überlappen, wobei die Länge der ersten Borsten bzw. Lamellen in diesem Sinne insbesondere die Länge des freiliegenden Abschnitts dieser ersten Borsten bzw. Lamellen ist, d.h. die Länge, die außerhalb ihrer Befestigungsstellen bzw. Verankerung gegeben ist.

Weiter kann vorgesehen sein, dass sich ein Teil der ersten und zweiten Borsten bzw. Lamellen überlappt, während ein anderer Teil der ersten Borsten bzw. Lamellen von einem anderen Teil der zweiten Borsten bzw. Lamellen unter Bildung des erwähnten Zwischenraums beabstandet ist.

Es kann auch vorgesehen sein, dass die oder einige der ersten Borsten bzw. Lamellen und die oder einige der zweiten Borsten bzw. Lamellen mit ihren freien Enden auf Stoß angeordnet sind.

Erfindungsgemäß ist vorsehen, dass die Halterung der Haltevorrichtung mittels eines U-förmigen Teils gebildet ist oder ein solches bildet, wobei dieses U-förmige Teil zwei gegenüberliegende Schenkel sowie einen quer zu diesen beiden gegenüberliegenden Schenkeln ausgerichteten und diese beiden gegenüberliegenden Schenkel verbindenden Verbindungsschenkel aufweist. Beispielsweise kann eine solche Halterung aus einem Flachstahl gebildet sein. Aber auch andere Materialien, wie beispielsweise Kunststoff oder Holz oder ein anderes Metall, sind bevorzugt. Die U-förmige Halterung kann beispielsweise auch aus Faserverbundwerkstoff gebildet sein.

Das U-förmige Teil - sofern es in bevorzugter Gestaltung gegeben ist - kann beispielsweise so geformt sein, dass die Materialdicke entlang der U-Form geringer, insbesondere deutlich geringer ist, als die Tiefe senkrecht zur U-Form bzw. senkrecht zu der ebene, die durch die U-Form aufgespannt wird. In anderen Worten ist in der Draufsicht auf eine U-Förmige Stirnfläche des U-förmigen Teils die Materialdicke im Bereich der beiden gegenüberliegenden Schenkel sowie des Verbindungsschenkels, die beispielsweise konstant sein kann, geringer als die Tiefe, die sich zwischen der genannten Stimfläche und der anderen U-Förmigen Stirnfläche des U-förmigen Teils erstreckt. Beispielsweise kann die genannte Tiefe größer als das 5-Fache, vorzugsweise größer als das 8-Fache, größer als das 10-Fache, größer als das 15-Fache der genannte Dicke oder maximalen Dicke (falls die Dicke variiert) sein.

Die Länge der gegenüberliegenden Schenkel des U-förmigen Teils kann beispielsweise größer als das 5-Fache, vorzugsweise größer als das 8-Fache, größer als das 10-Fache, größer als das 15-Fache der genannten Dicke oder - sofern die Dicke in einigen Ausführungsformen nicht konstant ist - maximalen Dicke (falls die Dicke variiert) sein. Die Länge der gegenüberliegenden Schenkel des U-förmigen Teils ist dabei das vom Verbindungsschenkel weg gerichtete Maß bzw. ist die Länge senkrecht zur genannte Dicke des betreffenden Schenkels und senkrecht zur genannten Tiefe des betreffenden Schenkels ausgerichtet.

Der Verbindungsschenkel kann mit einer Montageeinrichtung und/oder mit einem oder mehreren Montagelöchern versehen sein, die beispielsweise als Durchgangslöcher gestaltet sein können. Solche Durchgangslöcher können für jeweils eine Schraube vorgesehen sein, mittels welcher die Haltevorrichtung beispielsweise an einer Wand, insbesondere an einer aufrecht stehenden Wand oder auf einem Boden bzw. auf einem Bodenbelag-Abschnitt, wie beispielsweise Bodenelement, befestigt werden kann.

Alternativ oder ergänzend können aber auch anders gestaltete Befestigungselemente bzw. eine anders gestaltete Montageeinrichtung für das Befestigen der Haltevorrichtung an einer aufrecht stehenden Wand oder auf einem Boden bzw. auf einem Bodenbelag-Abschnitt vorgesehen sein. Dies gilt für die Haltevorrichtung, die mit einem U-förmigen Teil versehen ist, ebenso wie für solche, die auf ein derartiges U-förmiges Teil verzichten.

Es kann auch vorgesehen sein, dass die nicht beanspruchte Haltevorrichtung in vorteilhafter Weiterbildung zwei L-Profite aufweist, die jeweils einen ersten Schenkel und einen, insbesondere jeweils senkrecht zum ersten Schenkel gelegenen, zweiten Schenkel ausbilden. Die ersten Schenkel der beiden L-Profile können dabei zwei einander gegenüberliegende Schenkel sein, d.h. die beiden L-Profile können dabei so relativ zueinander angeordnet sein, dass die ersten Schenkel der beiden L-Profile zwei einander gegenüberliegende, voneinander beabstandete, z.B. parallel zueinander angeordnete, Schenkel bilden, zwischen denen der Raum für die Aufnahme eines Rades eines Fahrrades gegeben ist. Diese ersten Schenkel der beiden L-Profile können dabei die beiden einander gegenüberliegenden Halteabschnitte bilden bzw. Bestandteil von solchen sein.

Mittels der zweiten Schenkel können die zwei L-Profile gehalten sein, und zwar beispielweise an einer aufrecht stehenden Wand oder auf einem Boden bzw. auf einem Bodenbelag-Abschnitt, wie beispielsweise Bodenelement. Hierzu können beispielsweise die Schenkel der zwei L-Profile mit einer Montageeinrichtung und/oder mit einem oder mehreren Montagelöchern versehen sein, die beispielsweise als Durchgangslöcher gestaltet sein können. Solche Durchgangslöcher können für jeweils eine Schraube vorgesehen sein, mittels welcher die Haltevorrichtung bzw. die beiden L-Profile der Haltevorrichtung beispielsweise an einer Wand, insbesondere an einer aufrecht stehenden Wand oder auf einem Boden bzw. auf einem Bodenbelag-Abschnitt, wie beispielsweise Bodenelement, befestigt werden können.

Die ersten Schenkel der beiden L-Profile können im Wesentlichen parallel zueinander mit Abstand (quer zu ihrer Längserstreckungsrichtung) angeordnet sein, und die zweiten Schenkel können dabei beispielsweise so angeordnet sein, dass sie miteinander fluchten. Solche miteinander fluchtenden zweiten Schenkel können beispielsweise mit ihren freien Enden aufeinander zugerichtet sein, oder sie können mit freien Enden voneinander weggerichtet sein.

Anstelle eines U-förmigen oder zweier L-förmiger Teile können aber auch anders nicht beanspruchte gestaltete Teile vorgesehen sein, die zwei parallele Schenkel mit einem dazwischen gebildeten Raum für die Aufnahme eines Rades eines Fahrrades aufweisen, wie beispielsweise eine Platte, an der die beiden parallelen Schenkel vorgesehen sind, oder ein Ring, von dem - senkrecht zu der von ihm aufgespannten Ebene - die beiden parallelen Schenkel abragen. Dabei kann ein Halteteil vorgesehen sein, wie in den beiden vorgenannten Beispielen die Platte bzw. der Ring, das zum Befestigen der Haltevorrichtung an einer Wand oder auf einem Boden bzw. auf einem Bodenbelag-Abschnitt, wie beispielsweise Bodenelement, dient und/oder zum haltenden Verbinden der beiden Schenkel. Dieses Halteteil kann beispielsweise in oben in Bezug auf die zweiten Schenkel bzw. den Verbindungsschenkel beschriebener Weise mit Löchern versehen sein, wobei anzumerken sind, dass diese zweiten Schenkel bzw. dieser Verbindungsschenkel auch beispielhafte Halteteile bilden.

Die gegenüberliegenden Halteabschnitte werden vorzugsweise von gegenüberliegenden Schenkeln oder Flanschen gebildet, wie z.B. Schenkel eines U-förmigen Teils oder Schenkel eines L-förmigen Teils.

Wie bereits angedeutet kann die Haltevorrichtung einen ersten einen ersten Tragkörper aufweisen, an oder in welchem die ersten Borsten bzw. Lamellen gehalten bzw. befestigt sind (kurz: befestigt sind). Ferner kann die Haltevorrichtung einen ersten einen, insbesondere vom ersten Tragkörper verschiedenen, zweiten Tragkörper aufweisen, an oder in welchem die zweiten Borsten bzw. Lamellen gehalten bzw. befestigt sind (kurz: befestigt sind). Dabei bildet der erste Tragkörper mit den ersten Borsten insbesondere eine erste Bürste, und der zweite Tragkörper mit den zweiten Borsten bildet dabei insbesondere eine zweite Bürste. Die erste Bürste kann an einem der gegenüberliegenden Schenkel befestigt sein, und die zweite Bürste kann an dem anderen der gegenüberliegenden Schenkel befestigt sein, und zwar jeweils an der dem Raum zwischen den Schenkel zugewandten Seite.

Es kann vorgesehen sein, dass der erste Tragkörper von einem ersten der zwei einander gegenüberliegenden Halteabschnitte bzw. Schenkel der Halterung getragen wird, und dass der zweite Tragkörper von einem zweiten der zwei einander gegenüberliegenden Halteabschnitte bzw. Schenkel der Halterung getragen wird.

Es kann vorgesehen sein, dass die Halterung derart elastisch ausgebildet ist, dass die zwei einander gegenüberliegende Halteabschnitte bzw. Schenkel der Halterung und/oder die zwei gegenüberliegenden Schenkel des U-förmigen Teils zumindest partiell aufeinander zu und/oder voneinander weg beweglich sind. Es kann aber auch vorgesehen sein, dass wenigstens ein elastisches Teil innerhalb der Halterung und/oder zwischen den beiden Halteabschnitten bzw. Schenkeln bzw. auf der dem Raum zur Aufnahme eines Rades zugewandten Seite angeordnet sind. Insbesondere kann vorgesehen sein, dass sich ein in den Raum eingeführtes Rad elastisch an solchen elastischen Elementen abstützen kann bzw. geklemmt wird.

Sofern im Rahmen dieser Anmeldung von dem (zwischen den zwei einander gegenüberliegenden Halteabschnitten ausbildeten ausgebildeten) Raum für die Aufnahme eines Rades eines Fahrrades die Rede ist, sein angemerkt, dass dies nicht bedeutet, dass das Rad (d.h. Vorder- oder Hinterrad) vollständig in diesem Raum aufgenommen werden kann. Dieser Raum dient insbesondere dem Eintauchen eines Abschnittes eines Rades. Beispielsweise kann dieser Raum, der durch die einander gegenüberliegenden Halteabschnitte bzw. Schenkel definiert wird, ein Volumen haben, das größer als 30cm³ und kleiner als 20.000 cm³, vorzugsweise größer als 30 cm³ und kleiner als 20.000 cm³, vorzugsweise größer als 30 cm³ und kleiner als 15.000 cm³, vorzugsweise größer als 30 cm³ und kleiner als 10.000 cm³, vorzugsweise größer als 30 cm³ und kleiner als 8.000 cm³, vorzugsweise größer als 200 cm³ und kleiner als 5.000 cm³, vorzugsweise größer als 400 cm³ und kleiner als 3.000 cm³, vorzugsweise größer als 500 cm³ und kleiner als 2.000 cm³ ist.

Borsten bzw. Lamellen sind vorzugsweise länger als 1 cm und kürzer als 20 cm, vorzugsweise länger als 2 cm und kürzer als 18 cm, vorzugsweise länger als 3 cm und kürzer als 15 cm, vorzugsweise länger als 4 cm und kürzer als 12 cm vorzugsweise länger als 5 cm und kürzer als 10 cm.

Die einander gegenüberliegenden Halteabschnitte bzw. Schenkel haben vorzugsweise einen Abstand voneinander, der größer als 1 cm und kleiner als 30 cm, vorzugsweise größer als 2 cm und kleiner als 25 cm, vorzugsweise größer als 3 cm und kleiner als 20 cm, vorzugsweise größer als 4 cm und kleiner als 15 cm, vorzugsweise größer als 5 cm und kleiner als 13 ist.

Vorzugsweise ist der bzw. sind die Tragkörper und / oder der erste Schenkel und/oder der zweite Schenkel und/oder die Borsten bzw. Lamellen elastisch gestaltet.

Die Borsten bzw. Lamellen bzw. die Borsten der Bürste können beispielsweise aus Kunststoff (besonders bevorzugt) bestehen, oder Naturborsten sein, oder aus Metall sein.

Der bzw. die Tragkörper für die Borsten bzw. Lamellen können beispielsweise bestehen aus Holz (besonders bevorzugt) oder aus Kunststoff oder aus Metall.

Die Haltekonstruktion bzw. die Halterung kann beispielsweise bestehen aus Metall oder aus Kunststoff oder aus Holz,

Die Halterung ist kann so sein, dass die Reifen unterschiedlicher Größe durch die Borsten der Bürste gehalten werden. Die Borsten bzw. Lamellen können gleiche oder unterschiedliche Längen haben und sie können sich berühren oder überschneiden. Die Tragkonstruktion bzw. Halterung ist beispielsweise leicht flexibel (wobei starr auch möglich ist) und gibt beim Einpressen des zu haltenden Gegenstandes (z.B. Reifen) auch etwas nach. Die Halterung wird z.B. an der Wand befestigt, z.B. durch Schrauben oder durch Kleben.

Im Folgenden wird eine beispielhafte Funktionsweise erläutert: Das Fahrrad /der Gegenstand wird zwischen die Bürsten gedrückt und erlangt durch die Rückstellfähigkeit der Bürsten und auch der Tragkonstruktion bzw. Halterung halt. Das Fahrrad kann vertikal oder horizontal stehen. Bei horizontaler Aufstellung eines Fahrrades muss der Hinterreifen eingeschoben werden.

Erfindungsgemäß ist ferner eine Fahrrad-Haltevorrichtung vorgesehen mit wenigstens einem Bodenbelag-Abschnitt, und mit einer Haltevorrichtung für Fahrräder; wobei diese Haltevorrichtung mittels wenigstens eines Befestigungselements (z.B. Schraube und/oder Schelle) an dem wenigstens einem Bodenbelag-Abschnitt (z.B. Bodenplatte oder Erde oder Steinplatte oder geteerter Bereich oder Beton-Bereich oder Teerplatte oder Betonplatte oder Holzplatte oder Pflasterstein oder Anordnung von Pflastersteinen oder dergleichen) befestigt ist, und wobei die Haltevorrichtung in erfindungsgemäßer Weise ausgestaltet ist.

Dabei ist die Haltevorrichtung für Fahrräder vorzugsweise so insbesondere so befestigt und relativangeordnet, dass die gegenüberliegenden Halteabschnitte bzw. Schekel quer, vorzugsweise senkrecht, zum Boden bzw. zum Bodenbelag-Abschnitt ausgerichtet sind. Dies ist insbesondere so, dass der Raum zwischen den Halteabschnitten nach oben offen ist, und insbesondere auch seitlich an den verbleiben zwei von vier Seiten die mit den Haltabschnitten (gedacht) umfangmäßig geschlossen sind.

Erfindungsgemäß ist ferner eine Fahrrad-Haltevorrichtung vorgesehen mit einem wenigstens einer aufrecht, z.B. senkrecht bzw. vertikal, stehenden Wand (z.B. festangeordnete Wand und/oder z.B. Keller-Wand, Gebäudewand, auf dem betreffenden Boden bzw. Untergrund festmontierte Wand oder dgl.), und mit einer Haltevorrichtung für Fahrräder, die in erfindungsgemäßer weise ausgebildet ist mittels wenigstens eines Befestigungselements (z.B. Schraube und/oder Schelle) an der aufrecht stehenden Wand befestigt ist

Gemäß einem weiteren Aspekt der Erfindung - und die Anmelderin behält sich vor, diesen Aspekt auch im Laufe des Anmeldeverfahrens zu beanspruchen - ist eine Fahrrad-Haltevorrichtung vorgesehen, die als mobile Fahrrad-Haltevorrichtung ausgebildet ist und für die Abstützung auf einem Untergrund gestattet ist, und eine Haltevorrichtung für Fahrräder aufweist, die in erfindungsgemäßer Weise ausgebildet ist. Diese Fahrrad-Haltevorrichtung kann beispielsweise eine erfindungsgemäße Haltevorrichtung aufweisen, die sich auf einer Platte oder dergleichen abstützt.

Es versteht sich, dass die Weiterbildungen der erfindungsgemäßen Haltevorrichtung für Fahrräder, die in dieser Offenbarung offenbart sind, auch (in entsprechender Kombination) Weiterbildungen der erfindungsgemäßen Fahrrad-Haltevorrichtungen sein können.

Erfindungsgemäß ist ferner ein Verfahren zum Abstellen eines Fahrrades in einer gehaltenen Stellung vorgesehen, in der das Fahrrad mit einem oder mit beiden Rädern des Fahrrades nach unten und/oder auf einem Untergrund abgestützt ist und in einer im Wesentlichen aufrechten Stellung ist mit den Schritten::Bereitstellen wenigstens einer erfindungsgemäßen Haltevorrichtung für Fahrräder und/oder wenigstens einer erfindungsgemäßen Fahrrad-Haltevorrichtung; Einführen eines Vorderrades eines Fahrrades oder eines Hinterrades dieses Fahrrades in den Raum für die Aufnahme eines Rades eines Fahrrades, der zwischen den zwei einander gegenüberliegenden Halteabschnitten der Haltevorrichtung für Fahrräder gebildet wird, wobei Borsten bzw. Lamellen der Haltevorrichtung mit dem eingeführten Rad des Fahrrades zum Halten des Fahrrades in einer aufrechten Position in Kontakt treten, wobei das Fahrrad zum Einführen eines Vorderrades des Fahrrades oder des Hinterrades dieses Fahrrades in den Raum für die Aufnahme eines Rades des Fahrrades in Stützbereichen gehalten wird; Entlasten des Fahrrades in diesen Stützbereichen von den zum Einführen aufgebrachten Haltekräften, so dass das Fahrrad fortan in einer aufrechten Position mittels des Untergrundes und mittels des Haltevorrichtung gehalten wird.

Die erfindungsgemäße Haltevorrichtung ist insbesondere zur Durchführung des Erfindungsgemäßen Verfahrens geeignet.

Es versteht sich, dass die Haltevorrichtung für Fahrräder, die beim erfindungsgemäßen Verfahren verwendet wird, im Rahmen des Verfahrens auch entsprechend irgendeiner der Weiterbildungen ausgestaltet sein kann, die in der dieser Offenbarung offenbart sind.

Die Aufrechtstellung des Fahrrades ist insbesondere eine Stellung, die so ist, dass die durch Ober- und/oder Unterrohr, Steuerrohr und Sitzrohr definierte Ebene im Wesentlichen vertikal ist bzw. mit dem Untergrund einen Winkel einschließt, der größer als 45°, vorzugsweise größer als 60°, vorzugsweise größer als 70°, vorzugsweise größer als 80° ist.

Mit der Erfindung wird erreicht, dass Fahrräder unterschiedlicher Größen und Reifendicken problemlos aufgenommen und auch wieder entnommen werden können, ohne dass dafür weitere Handgriffe notwendig sind.

Eine vorteilhafte Ausgestaltung der Erfindung wird anhand der Fig. 1, Fig. 2, Fig. 3 und Fig. 4 dargestellt und erläutert. Es zeigen:
- Fig. 1: Die Haltevorrichtung in Grundriss ;
- Fig. 2: Die Haltevorrichtung in Ansicht (2);
- Fig. 3: Die Stellung des Fahrrades in der Halterung bzw. Haltevorrichtung in senkrechter Position (3);
- Fig. 4: Die Stellung des Fahrrades in der Halterung bzw. Haltevorrichtung in waagrechter Position (4), und
- Fig. 5: Eine Draufsicht auf zwei Fahrräder 2, die jeweils mittels einer beispielhaften erfindungsgemäßen Haltevorrichtung 1 an einer Wand 4 gehalten sind.

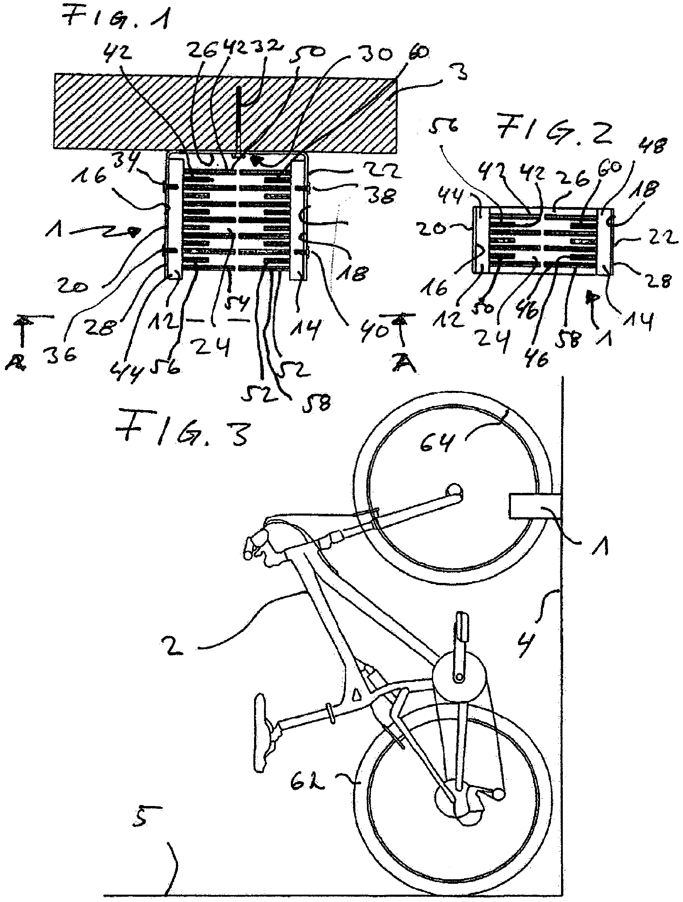

An der in Fig. 1 bzw. 2 dargesteilten Haltevorrichtung sind gegenüberliegend Bürsten, je nach Ausführung auch in unterschiedlichen Längen, angebracht, welche sich aufgrund der gegenüberliegenden Positionierung zum Teil überlappen können. Die Flexibilität der Bürsten sowie eine gewisse Flexibilität der Halterung lässt das Einführen von Fahrradreifen unterschiedlicher Größe mit relativ wenig Kraftaufwand zu. Die Anzahl im Zusammenspielt mit den unterschiedlichen Längen der Bürsten erzeugen ausreichend Reibung, um ein Fahrrad stabil an der Wand oder auf dem Boden zu halten. Mit wenig Kraftaufwand und somit auch für Kinder geeignet, lässt sich das Fahrrad mit einem Ruck nach hinten aus der Halterung entfernen. Neben Fahrrädern können auch andere Alltagsgegenstände wie Gartengeräte, Skateboards und ähnliches aufgenommen werden.

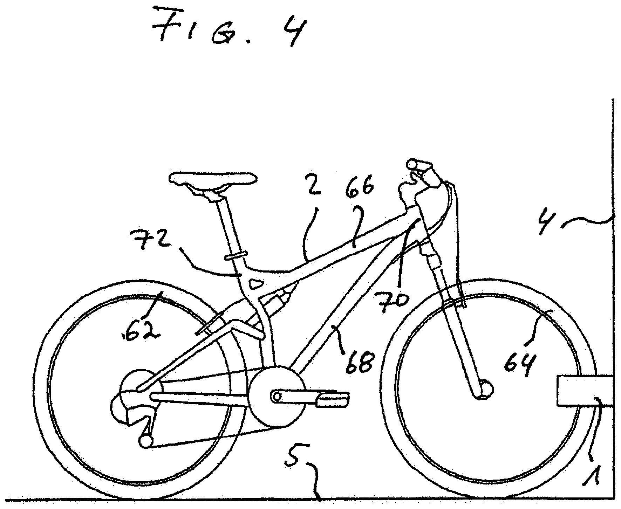

Fig. 1 zeigt insbesondere eine Haltevorrichtung 1 für Fahrräder 2. Der in Fig. 1 gezeigte Gegenstand 3 kann - wie auch aus der Zusammenschau der Figuren 3 und 4 ersichtlich - beispielsweise wahlweise eine Wand 4 (vgl. auch Fig. 3) oder ein Boden bzw. Bodenbelag-Abschnitt 5 (vgl. auch Fig. 4) sein. Im erstgenannten Fall stellt Fig. 1 eine Draufsicht auf die Haltevorrichtung 1 dar, und im zweitgenannten Fall stellt Fig. 1 einen über-Kopf-stehende Seitenansicht der Haltevorrichtung 1 dar.

Die Haltevorrichtung 1 weist eine Halterung 10, eine erste Bürste 12 und eine zweite Bürste 14 auf.

Die Halterung 10 ist aus Metall, kann beispielsweise aber auch aus beispielsweise aus Kunststoff sein. Die Halterung 10 ist hier U-förmig und weist zwei einander gegenüberliegende Halteabschnitte 16, 18 auf, die von jeweils einem Schenkel 20, 22, also einem ersten Schenkel bzw. einem zweiten Schenkel 22, gebildet werden. Die Schenkel 20, 22 erstrecken sich im Wesentlichen parallel zueinander und sind voneinander beabstandet, so dass sie zwischen sich einen Raum 24 für die Aufnahme eines Rades eines Fahrrades ausbilden.

Die beiden einander gegenüberliegenden Schenkel 20, 22 sind an jeweils einem ihrer Enden über einen Verbindungsschenkel 26 miteinander verbunden. Somit weist die Halterung 10 ein mittels der Schenkel 20, 22 und mittels des Verbindungsschenkels 26 gebildetes U-förmiges Teil 28 auf bzw. ist ein solches.

Der Verbindungsschenkel 26 ist mit einem oder mehreren Montagelöchern 30 versehen, das als Durchgangsloch ausgebildet ist, so dass mittels (jeweils) eines sich dadurch erstreckenden Befestigungselements, wie Schraube, 32 die Haltevorrichtung 1 an dem Gegenstand 3 befestigt werden kann.

Die erste Bürste kann an einem der gegenüberliegenden Schenkel befestigt sein, und die zweite Bürste kann an dem anderen der gegenüberliegenden Schenkel befestigt sein, und zwar jeweils an der dem Raum zwischen den Schenkel zugewandten Seite. Hierzu können beispielsweise Schrauben 34, 36, 38, 40 vorgesehen sein.

Die erste Bürste 12 weist eine Vielzahl von ersten Borsten 42 sowie einen ersten Tragkörper 44 auf, an bzw. in dem die ersten Borsten 42 befestigt sind.

Die zweite Bürste 14 weist eine Vielzahl von zweiten Borsten 46 sowie einen zweiten Tragkörper 48 auf, an bzw. in dem die ersten Borsten 46 befestigt sind.

Hier sind die ersten Borsten 42 sowie die zweiten Borsten 46 jeweils als erste Borstenbündel 50 bzw. zweite Borstenbündel 52 gestaltet bzw. gruppiert.

Wie gut die Figuren 1 und 2 verdeutlichen, sind erste Borsten 42 einer ersten Länge 54 und erste Borsten 42 einer zweiten Länge 56, die sich von der ersten Länge 54 unterscheidet, vorgesehen. Ferner sind zweite Borsten 46 einer dritten Länge 58 und zweite Borsten 46 einer vierten Länge 60, die sich von der dritten Länge 58 unterscheidet, vorgesehen. Die erste Länge 54 ist in etwas gleich der dritten Länge 58 und die zweite Länge 56 ist in etwa gleich der vierten Länge 60. Die zweite Länge 56 ist hier etwa halb so groß wie die erste Länge 54, bezogen auf die Länge der Borsten 42, 46 außerhalb der des ersten Tragkörpers 44.

Die Borsten 42, 46 sind elastisch. Die Halterung 10 ist ebenfalls elastisch, und war so, dass die Schenkel 20, 22 federnd nach außen bzw. voneinander weg gedrückt werden können, (wobei dabei der größte Weg im Bereich der freien Enden der Schenkel 20, 22 zurückgelegt wird.

Fig. 2 zeigt eine Ansicht der Fig. 1 aus Sicht der Linie A-A.

Fig. 3 zeigt ein Fahrrad 2 in einer aufrechten Stellung, in der sich das Fahrrad 2 auf dem Boden 5 nur mit seinem Hinterrad 62 abstützt, während das Vorderrad 64 in dem Raum 24 der Haltevorrichtung 1 aufgenommen und gehalten ist. Die Haltevorrichtung 1 ist hier auf dem Boden 5 montiert.

Fig. 4 zeigt ein Fahrrad 2 in einer aufrechten Stellung, in der sich das Fahrrad auf dem Boden 5 nur mit seinem Vorderrad 64 und mit seinem Hinterrad 62 abstützt, während das Vorderrad 62 in dem Raum 24 der Haltevorrichtung 1 aufgenommen und gehalten ist. Die Haltevorrichtung 1 ist hier an der Wand 4 montiert.

Das Fahrrad weist ferner ein Oberrohr 66, ein Unterrohr 68, ein Steuerrohr 70 und ein Sitzrohr 72 auf.

Es sei angemerkt, dass in Fig. 4 das Vorderrad 62 des Fahrrades 2 in dem Raum 24 der Haltevorrichtung 1 aufgenommen und gehalten ist, alternativ aber selbstverständlich das Hinterrad 62 des Fahrrades 2 in dem Raum 24 der Haltevorrichtung 1 aufgenommen und gehalten sein kann, was in viele Fällen sogar eine stabilere Variante bildet. Die Haltevorrichtung 1, die bei den Gestaltungen gemäß den Fig. 3 bzw. 4 gegeben ist, kann beispielsweise so gestaltet sein, wie sie anhand der Fig. 1 und 2 erläutert wurde.

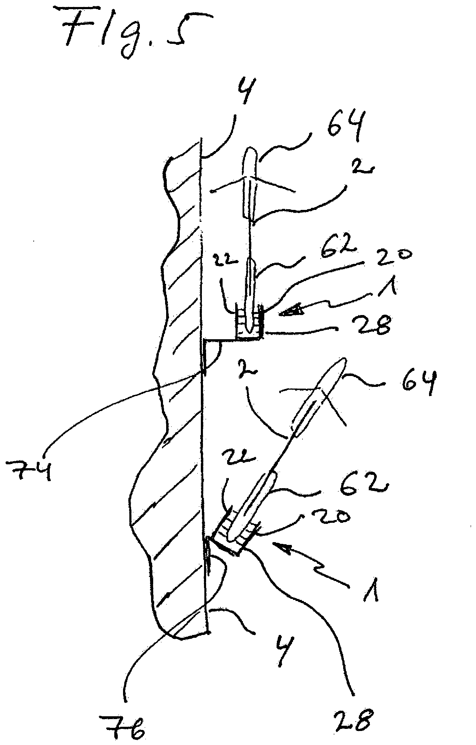

Fig. 5 zeigt eine Draufsicht auf zwei Fahrräder 2, die jeweils mittels einer beispielhaften erfindungsgemäßen Haltevorrichtung 1 an einer Wand 4 gehalten sind.

Im Gegensatz zu der Fig. 4, ist hier beispielhaft das Hinterrad 62 des jeweiligen Fahrrades 2 in dem Raum 24 der Haltevorrichtung 1 aufgenommen und gehalten.

Die beiden in Fig. 5 gezeigten beispielhaften Haltevorrichtungen 1 unterscheiden sich von der anhand der Figuren 1 und 2 erläuterten, beispielhaften Haltevorrichtungen 1 - beispielsweise - im Wesentlichen dadurch, dass zusätzlich ein Halteelement 74 bzw. 76 vorgesehen ist. Diese Halteelement 74 bzw. 76 ist mit der - hier wie auch den Figuren 1 und 2 beispielhaft U-Förmigen - Haltevorrichtung 1 verbunden. Diese Verbindung kann fest sein. Alternativ kann sie aber auch lösbar sein, beispielsweise um zu ermöglichen, dass ein anders gestaltetes Halteelement 74 bzw. 76 an der betreffenden Haltevorrichtung 1 angebracht wird und somit eine andere Aufstellungskonfiguration des oder der Fahrräder 2 ermöglicht wird. Für den letztgenannten Zweck des lösbaren Halteelements kann beispielsweise das Montageloch 30 erhalten bleiben, dass ansonsten aber auch weggelassen werden kann.

Das Halteelement 74 ist hier beispielhaft als rechtwinkliges Element gestaltet, wodurch beispielsweise eine Anordnung des Fahrrades 2 mit seiner durch das Ober-66 und/oder Unterrohr 68, das Steuerrohr 70 und das Sitzrohr 72 definierten Ebene parallel zur Wand 4 ermöglicht wird. Dieser Winkel kann lösbar (z.B. verschraubt) oder fest (z.B. verschweißt an der Haltevorrichtung 1 angebracht sein, und zwar insbesondere am Verbindungsschenkel 26 der Haltevorrichtung 1

Das Halteelement 76 ist hier beispielhaft als spitzes Winkeletement oder als unter einem spitzen Winkel (an z.B. den Verbindungsschenkel 26 bzw. den Übergang vom Verbindungsschenkel 26 zum zweiten Schenkel 22 angeformte (z.B. angeschweißte) Platte gestaltet, wodurch beispielsweise eine Anordnung des Fahrrades 2 mit seiner durch das Ober- 66 und/oder Unterrohr 68, das Steuerrohr 70 und das Sitzrohr 72 definierten Ebene schräg zur Wand zur Wand 4 ermöglicht wird. Dieser Halteelement 76 Winkel kann lösbar (z.B. verschraubt) oder fest (z.B. verschweißt) an der Haltevorrichtung 1 angebracht sein, und zwar insbesondere am Verbindungsschenkel 26 der Haltevorrichtung 1 oder am o.g. Übergang. Der Winkel, unter dem das Fahrrad 2 zur Wand aufgestellt ist, hängt dabei insbesondere von dem Winkels des spitzen Winkelelements bzw. dem Winkel, unter dem die Platte angeformt ist, ab.

### Bezugszeichen

- 1: Haltevorrichtung
- 2: Fahrrad
- 3: Gegenstand
- 4: Wand
- 5: Boden, Bodenbelag-Abschnitt
- 10: Halterung von 1
- 12: erste Bürste von 1
- 14: zweite Bürste von 1
- 16: Halteabschnitt von 1
- 18: Halteabschnitt von 1
- 20: erster Schenkel
- 22: zweiter Schenkel
- 24: Raum
- 26: Verbindungsschenkel
- 28: U-förmiges Teil
- 30: Montageloch
- 32: Befestigungselement, Schraube
- 34: Schraube
- 36: Schraube
- 38: Schraube
- 40: Schraube
- 42: erste Borste von 12
- 44: erster Tragkörper von 12
- 46: zweite Borste von 14
- 48: zweiter Tragkörper von 14
- 50: erstes Borstenbündel von 12
- 52: zweites Borstenbündel von 14
- 54: erste Länge von 42
- 56: zweite Länge von 42
- 58: erste Länge von 46
- 60: zweite Länge von 46
- 62: Hinterrad von 2
- 64: Vorderrad von 2
- 66: Oberrohr
- 68: Unterrohr
- 70: Steuerrohr
- 72: Sitzrohr
- 74: Halteelement
- 76: Halteelement

## Patentansprüche

1. Haltevorrichtung für Fahrräder (2), wobei die Haltevorrichtung (1) aufweist:
eine Halterung (10), und
eine Vielzahl von Borsten (42, 46) und/oder Lamellen, die mittels der Halterung (10) getragen sind,
wobei die Halterung (10) zwei einander gegenüberliegende Halteabschnitte (16, 18) ausbildet, zwischen welchen ein Raum (24) für die Aufnahme eines Rades eines Fahrrades (2) ausgebildet ist, und wobei zumindest ein Teil dieser Borsten (42, 46) und/oder Lamellen mit jeweils zumindest einem freien Ende in diesen Raum (24) ragt;
wobei sich erste Borsten (42) und/oder Lamellen der Vielzahl von Borsten (42, 46) und/oder Lamellen aus der Richtung von und/oder von dem einen der zwei einander gegenüberliegenden Halteabschnitte (16, 18) mit ihren freien Enden in diesen Raum (24) erstrecken, der für die Aufnahme eines Rades eines Fahrrades (2) zwischen zwei einander gegenüberliegende Halteabschnitten (16, 18) ausgebildet ist, und dass sich zweite Borsten (46) und/oder Lamellen der Vielzahl von Borsten (42, 46) und/oder Lamellen aus der Richtung von und/oder von dem anderen der zwei einander gegenüberliegenden Halteabschnitte (16, 18) mit ihren freien Enden in diesen Raum (24) erstrecken, der für die Aufnahme eines Rades eines Fahrrades (2) zwischen zwei einander gegenüberliegende Halteabschnitten (16, 18) ausgebildet ist;
**dadurch gekennzeichnet, dass**
mehrere ersten Borsten (42) und/oder Lamellen weiter in diesen Raum (24), der für die Aufnahme eines Rades eines Fahrrades (2) zwischen zwei einander gegenüberliegende Halteabschnitten (16, 18) ausgebildet ist, ragen als mehrere andere erste Borsten (42) und/oder Lamellen, und/oder dass mehrere zweite Borsten (46) und/oder Lamellen weiter in diesen Raum (24), der für die Aufnahme eines Rades eines Fahrrades (2) zwischen zwei einander gegenüberliegende Halteabschnitten (16, 18) ausgebildet ist, ragen als mehrere andere zweite Borsten (46) und/oder Lamellen;
die Halterung (10) mittels eines U-förmigen Teils (28) gebildet ist, wobei dieses U-förmige Teil (28) zwei gegenüberliegende Schenkel (20, 22) sowie einen quer zu diesen beiden gegenüberliegenden Schenkeln (20, 22) ausgerichteten und diese beiden gegenüberliegenden Schenkel (20, 22) verbindenden Verbindungsschenkel (26) aufweist.

2. Haltevorrichtung nach Anspruch 1, **dadurch gekennzeichnet, dass** zwischen den freien Enden der ersten Borsten (42) und/oder Lamellen und den freien Enden der zweiten Borsten (46) und/oder Lamellen ein borstenfreier und/oder lamellenfreier Zwischenraum vorgesehen ist, und zwar in Richtung der Längserstreckung dieser Borsten (42, 46) und/oder Lamellen in ihrem von außen unbelasteten Zustand gesehen.

3. Haltevorrichtung nach einem der Ansprüche 1 und 2, **dadurch gekennzeichnet, dass** sich mehrere ersten Borsten (42) und/oder Lamellen mit mehreren zweiten Borsten (46) und/oder Lamellen überlappen, und zwar in Richtung der Längserstreckung dieser ersten Borsten (42) und/oder Lamellen und/oder in Richtung der Längserstreckung dieser zweiten Borsten (46) und/oder Lamellen im von außen unbelasteten Zustand der Borsten (42, 46) und/oder Lamellen gesehen.

4. Haltevorrichtung nach einem der vorangehenden Ansprüche, **dadurch gekennzeichnet, dass** die Haltevorrichtung (1) ferner einen ersten Tragkörper (44) sowie einen zweiten Tragkörper (48) aufweist, wobei die ersten Borsten (42) und/oder Lamellen an oder in dem ersten Tragkörper (44) befestigt sind, und wobei die zweiten Borsten (46) und/oder Lamellen an oder in dem zweiten Tragkörper (48) befestigt sind.

5. Haltevorrichtung nach Anspruch 4, **dadurch gekennzeichnet, dass** der erste Tragkörper (44) von einem ersten der zwei einander gegenüberliegenden Halteabschnitte (16, 18) der Halterung (10) getragen wird, und dass der zweite Tragkörper (48) von einem zweiten der zwei einander gegenüberliegenden Halteabschnitte (16, 18) der Halterung (10) getragen wird.

6. Haltevorrichtung nach einem der vorangehenden Ansprüche, **dadurch gekennzeichnet, dass** die Halterung (10) derart elastisch ausgebildet ist, dass die zwei einander gegenüberliegende Halteabschnitte (16, 18) der Halterung (10) und/oder die zwei gegenüberliegenden Schenkel (20, 22) des U-förmigen Teils (28) zumindest partiell aufeinander zu und/oder voneinander weg beweglich sind.

7. Fahrrad-Haltevorrichtung mit
einem wenigstens einem Bodenbelag-Abschnitt (5), und mit einer Haltevorrichtung für Fahrräder (2);
wobei diese Haltevorrichtung mittels wenigstens eines Befestigungselements (32) an dem wenigstens einem Bodenbelag-Abschnitt (5) befestigt ist, **dadurch gekennzeichnet, dass**
die Haltevorrichtung (1) gemäß einem der vorangehenden Ansprüche ausgebildet ist.

8. Fahrrad-Haltevorrichtung mit
wenigstens einer aufrecht stehenden Wand (4), und mit einer Haltevorrichtung für Fahrräder (2);
wobei diese Haltevorrichtung (1) mittels wenigstens eines Befestigungselements (32) an der aufrecht stehenden Wand (4), befestigt ist,
**dadurch gekennzeichnet, dass**
die Haltevorrichtung (1) gemäß einem der Ansprüche 1 bis 6 ausgebildet ist.

9. Verfahren zum Abstellen eines Fahrrades (2) in einer gehaltenen Stellung, in der das Fahrrad (2) mit einem oder mit beiden Rädern des Fahrrades (2) nach unten und/oder auf einem Untergrund abgestützt ist und in einer im Wesentlichen aufrechten Stellung ist, mit den Schritten:
Bereitstellen wenigstens einer Haltevorrichtung für Fahrräder (2) gemäß einem der Ansprüche 1 bis 6 und/oder wenigstens einer Fahrrad-Haltevorrichtung gemäß einem der Ansprüche 7 bis 8; Einführen eines Vorderrades eines Fahrrades (2) oder eines Hinterrades dieses Fahrrades (2) in den Raum (24) für die Aufnahme eines Rades (62, 64) eines Fahrrades (2), der zwischen den zwei einander gegenüberliegenden Halteabschnitten (16, 18) der Haltevorrichtung (1) für Fahrräder (2) gebildet wird, wobei Borsten (42, 46) und/oder Lamellen der Haltevorrichtung (1) mit dem eingeführten Rad (62, 64) des Fahrrades (2) zum Halten des Fahrrades (2) in einer aufrechten Position in Kontakt treten, wobei das Fahrrad (2) zum Einführen eines Vorderrades (64) des Fahrrades (2) oder des Hinterrades (62) dieses Fahrrades (2) in den Raum (24) für die Aufnahme eines Rades (62, 64) des Fahrrades (2) in Stützbereichen gehalten wird; und
Entlasten des Fahrrades (2) in diesen Stützbereichen von den zum Einführen aufgebrachten Haltekräften, so dass das Fahrrad (2) fortan in einer aufrechten Position mittels des Untergrundes und mittels der Haltevorrichtung gehalten wird.

## Claims

1. A holding device for bicycles (2), wherein the holding device (1) comprises:
a mounting (10); and
a plurality of bristles (42, 46) and/or blades that are supported by the mounting (10);
wherein the mounting (10) forms two facing holder sections (16, 18) between which a space (24) is formed for the accommodation of a wheel of a bicycle (2); and wherein
at least a portion of these bristles (42, 46) and/or blades, each with at least one free end, projects into said space (24);
wherein first bristles (42) and/or blades of the plurality of bristles (42, 46) and/or blades project from the direction of and/or from one of the two facing holder sections (16, 18) with their free ends into said space (24), which is configured for the accommodation of a wheel of a bicycle (2) between the two facing holder sections (16, 18);
and wherein second bristles (46) and/or blades of the plurality of bristles (42, 46) and/or blades project from the direction of and/or from the other of the two facing opposing holder sections (16, 18) with their free ends in said space (24) which is configured for the accommodation of a wheel of a bicycle (2) between the two facing holder sections (16, 18);
**characterized in that**
a plurality of first bristles (42) and/or blades projects farther into said space (24) which is configured for the accommodation of a wheel of a bicycle (2) between two facing holder sections (16, 18) than a plurality of other first bristles (42) and/or blades, and **in that** a plurality of second bristles (46) and/or blades projects farther into said space (24) which is configured for the accommodation of a wheel of a bicycle (2) between two facing holder sections (16, 18) than a plurality of other second bristles (46) and/or blades;
wherein the mounting (10) is formed by means of a U-shaped part (28), wherein said U-shaped part (28) comprises two facing legs (20, 22) as well as a connecting leg (26) which is oriented transversely to said two facing legs (20, 22) and connecting said two facing legs (20, 22).

2. The holding device according to claim 1, **characterized in that** a space free of bristles and/or blades is provided between the free ends of the first bristles (42) and/or blades and the free ends of the second bristles (46) and/or blades, namely seen in the direction of the longitudinal extension of said bristles (42, 46) and/or blades in their state in which no external load is applied to them.

3. The holding device according to one of claims 1 and 2, **characterized in that** a plurality of first bristles (42) and/or blades overlaps with a plurality of second bristles (46) and/or blades, namely seen in the direction of the longitudinal extension of these first bristles (42) and/or blades and/or in the direction of the longitudinal extension of said second bristles (46) and/or blades in the state of the bristles (42, 46) and/or blades in which no external load is applied to them.

4. The holding device according to any of the preceding claims, **characterized in that** the holding device (1) further comprises a first supporting body (44) and a second supporting body (48), wherein the first bristles (42) and/or blades are attached to or in said first supporting body (44), and wherein the second bristles (46) and/or blades are attached to or in said second supporting body (48).

5. The holding device according to claim 4, **characterized in that** said first supporting body (44) is supported by a first one of the two facing holder sections (16, 18) of the mounting (10), and that the second supporting body (48) is supported by a second one of the two facing holder sections (16, 18) of the mounting (10).

6. The holding device according to any of the preceding claims, **characterized in that** the mounting (10) is elastically configured such that the two facing holder sections (16, 18) of the mounting (10) and/or said two facing legs (20, 22) of the U-shaped part (28) are at least partially movable towards each other and/or away from each other.

7. A bicycle holding device having
at least one floor covering section (5), and having a holding device for bicycles (2);
wherein said holding device is fastened to the at least one floor covering section (5) by at least one fastening element (32),
**characterized in that**
the holding device (1) is designed according to any of the preceding claims.

8. A bicycle holding device having
at least one upright wall (4), and having
a holding device for bicycles (2);
wherein said holding device (1) is fastened to said upright wall (4) by at least one fastening element (32),
**characterized in that**
the holding device (1) is designed according to any of claims 1 to 6.

9. A method for parking a bicycle (2) in a held position, in which the bicycle (2) is supported with one or both wheels of the bicycle (2) downwards and/or on a floor and is in a substantially upright position, comprising the steps of:
providing at least one holding device for bicycles (2) according to any of claims 1 to 6 and/or at least one bicycle holding device according to any of claims 7 to 8;
inserting a front wheel of a bicycle (2) or a rear wheel of said bicycle (2) into the space (24) for the accommodation of a wheel (62, 64) of a bicycle (2), which is formed between the two facing holder sections (16, 18) of the holding device (1) for bicycles (2), wherein bristles (42, 46) and/or blades of the holding device (1) are contacting said inserted wheel (62, 64) of the bicycle (2) for holding the bicycle (2) in an upright position, wherein, for inserting a front wheel (64) of the bicycle (2) or the rear wheel (62) of this bicycle (2) into said space (24) for receiving a wheel (62, 64) of the bicycle (2), the bicycle (2) is held in support areas; and
relieving the bicycle (2) in these support areas from the holding forces applied for inserting, so that the bicycle (2) is henceforth held in an upright position by the floor and by the holding device.

## Revendications

1. Dispositif de maintien pour bicyclettes (2), dans lequel le dispositif de maintien (1) comprend :
un support (10) et
une pluralité de brosses (42, 46) et/ou de lamelles, qui sont supportées au moyen du support (10),
dans lequel le support (10) forme deux portions de maintien (16, 18) situées en face l'une de l'autre, entre lesquelles un espace (24) est réalisé pour le logement d'une roue d'une bicyclette (2) et dans lequel
au moins une partie de ces brosses (42, 46) et/ou lamelles dépasse, chacune avec au moins une extrémité libre, dans cet espace (24) ;
dans lequel des premiers brosses (42) et/ou lamelles de la pluralité de brosses (42, 46) et/ou de lamelles s'étendent de la direction des et/ou de l'une des deux portions de maintien (16, 18) disposées l'une en face de l'autre s'étendent, avec leurs extrémités libres, dans cet espace (24), qui est conçu pour le logement d'une roue d'une bicyclette (2) entre deux portions de maintien (16, 18) disposées l'une en face de l'autre et en ce que des deuxièmes brosses (46) et/ou lamelles de la pluralité de brosses (42, 46) et/ou de lamelles s'étendent de la direction des et/ou de l'autre des deux portions de maintien (16, 18), avec leurs extrémités libres, dans cet espace (24), qui est conçu pour le logement d'une roue d'une bicyclette (2) entre deux portions de maintien (16, 18) disposées l'une en face de l'autre ;
**caractérisé en ce que**
plusieurs premières brosses (42) et/ou lamelles dépassent plus loin dans cet espace (24), qui est conçu pour le logement d'une roue d'une bicyclette (2) entre deux portions de maintien (16, 18) disposées l'une en face de l'autre, que plusieurs autres premières brosses (42) et/ou lamelles et/ou **en ce que** plusieurs deuxièmes brosses (46) et/ou lamelles dépassent plus loin dans cet espace (24), qui est conçu pour le logement d'une roue d'un bicyclette (2) entre deux portions de maintien (16, 18) disposées l'une en face de l'autre, que plusieurs autres deuxièmes brosses (46) et/ou lamelles ;
le support (10) est constitué d'une partie en forme de U (28), cette partie en forme de U (28) comprenant deux branches (20, 22) disposées en face l'une de l'autre ainsi qu'une branche de liaison (26) orientée transversalement par rapport à ces deux branches (20, 22) disposées en face l'une de l'autre et reliant ces deux branches (20, 22) disposées en face l'une de l'autre.

2. Dispositif de maintien selon la revendication 1, **caractérisé en ce que**, entre les extrémités libres des premières brosses (42) et/ou lamelles et les extrémités libres des deuxièmes brosses (46) et/ou lamelles, est prévu un espace intermédiaire exempt de brosses et/ou exempt de lamelles, vu dans la direction de l'extension longitudinale de ces brosses (42, 46) et/ou lamelles dans leur état non sollicité de l'extérieur.

3. Dispositif de maintien selon l'une des revendications 1 et 2, **caractérisé en ce que** plusieurs premières brosses (42) et/ou lamelles se superposent avec plusieurs deuxièmes brosses (46) et/ou lamelles, vu dans la direction de l'extension longitudinale de ces premières brosses (42) et/ou lamelles et/ou dans la direction de l'extension longitudinale de ces deuxièmes brosses (46) et/ou lamelles dans l'état non sollicité de l'extérieur des brosses (42, 46) et/ou lamelles.

4. Dispositif de maintien selon l'une des revendications précédentes, **caractérisé en ce que** le dispositif de maintien (1) comprend en outre un premier corps de support (44) ainsi qu'un deuxième corps de support (48), les premières brosses (42) et/ou lamelles étant fixées sur ou dans le premier corps de support (44) et les deuxièmes brosses (46) et/ou lamelles étant fixées sur ou dans le deuxième corps de support (48).

5. Dispositif de maintien selon la revendication 4, **caractérisé en ce que** le premier corps de support (44) est supporté par une des deux portions de maintien (16, 18), disposées en face l'une de l'autre, du support (10) et **en ce que** le deuxième corps de support (48) est supporté par un deuxième des deux portions de maintien (16, 18) du support (10), disposées l'une en face de l'autre.

6. Dispositif de maintien selon l'une des revendications précédentes, **caractérisé en ce que** le support (10) est conçu de manière élastique de façon à ce que les deux portions de maintien (16, 18), disposées en face l'une de l'autre, du support (10) et/ou les deux branches (20, 22) disposées en face l'une de l'autre, de la partie en forme de U (28) sont mobiles au moins partiellement les unes vers les autres et/ou les unes à l'écart des autres.

7. Dispositif de maintien de bicyclette comportant
au moins une portion formant revêtement de sol (5) et avec
un dispositif de maintien pour bicyclettes (2) ;
ce dispositif de maintien étant fixé à l'au moins une portion formant revêtement de sol (5) au moyen d'au moins un élément de fixation (32),
**caractérisé en ce que**
le dispositif de maintien (1) est conçu selon l'une des revendications précédentes.

8. Dispositif de maintien de bicyclette avec
au moins une paroi verticale (4) et avec
un dispositif de maintien pour bicyclettes (2) ;
dans lequel ce dispositif de maintien (1) est fixé sur la paroi verticale (4) au moyen d'au moins un élément de fixation (32),
**caractérisé en ce que**
le dispositif de maintien (1) est conçu selon l'une des revendications 1 à 6.

9. Procédé pour la pose d'une bicyclette (2) dans une position de maintien, dans laquelle la bicyclette (2) est appuyée vers le bas avec une ou avec les deux roues de la bicyclette (2) et/ou repose sur un sol et dans une position sensiblement verticale, comportant les étapes suivantes :
mise à disposition d'au moins un dispositif de maintien pour bicyclettes (2) selon l'une des revendications 1 à 6 et/ou d'au moins un dispositif de maintien de bicyclette selon l'une des revendications 7 à 8 ;
introduction d'une roue avant d'une bicyclette (2) ou d'une roue arrière de cette bicyclette (2) dans l'espace (24) pour le logement d'une roue (62, 64) d'une bicyclette (2), qui est formé entre les deux portions de maintien (16, 18), disposées en face l'une de l'autre, du dispositif de maintien (1) pour bicyclettes (2), dans lequel des brosses (42, 46) et/ou lamelles du dispositif de maintien (1) entrent en contact avec la roue (62, 64) introduite de la bicyclette (2) pour le maintien de la bicyclette (2) dans une position verticale, dans lequel la bicyclette (2) est maintenue, pour l'introduction d'une roue avant (64) du bicyclette (2) ou de la roue arrière (62) de ce bicyclette (2) dans l'espace (24) pour le logement d'une roue (62, 64) de la bicyclette (2), dans des zones d'appui ; et
soulagement de la bicyclette (2), dans ces zones de soutien, des forces de maintien exercées pour l'introduction, de façon à ce que le bicyclette (2) soit alors maintenu dans une position verticale au moyen du sol et au moyen du dispositif de maintien.
